# EUROPÄISCHE PATENTSCHRIFT

(11) **EP 1 650 477 B1**
(45) Veröffentlichungstag und Bekanntmachung des Hinweises auf die Patenterteilung: **27.08.2008**
(21) Anmeldenummer: 05022100.1
(22) Anmeldetag: 11.10.2005
(51) Int. Cl.: F16H 55/56, F16H 9/18

(54) **Kegelscheibenumschlingungsgetriebe, sowie Fahrzeug mit einem derartigem Getriebe**
Belt type transmission with conical pulleys, as well as vehicle with such transmission
Transmission à poulies coniques et courroie, ainsi que vehicule avec une telle transmission

(30) Priorität: 23.10.2004 DE 102004051703
(43) Veröffentlichungstag der Anmeldung: 26.04.2006
(73) Patentinhaber: LuK Lamellen und Kupplungsbau Beteiligungs KG, 77815 Bühl (DE)
(72) Erfinder: Reuschel, Michael, 77833 Ottersweier (DE)

(56) Entgegenhaltungen:
- DE-A1- 3 824 864
- DE-A1- 10 354 720
- DE-U1- 8 221 745

## Beschreibung

Die Erfindung betrifft ein Automatgetriebe in Form eines Kegelscheibenumschlingungsgetriebes, wie es beispielsweise aus der DE 10 2004 015 215 und weiteren Veröffentlichungen bekannt ist, sowie ein damit ausgerüstetes Fahrzeug, entsprechend dem Oberbegriff der Ansprüche 1 und 7,

Automatgetriebe im weiteren Sinne sind Kennungswandler, deren momentane Übersetzung sich selbständig in Abhängigkeit von momentanen oder zu erwartenden Betriebszuständen, wie zum Beispiel Teillast, Schub und Umgebungsparameter, wie zum Beispiel Temperatur, Luftdruck, Luftfeuchtigkeit, stufenweise oder stufenlos verändert. Zu ihnen gehören solche Kennungswandler, die auf einem elektrischen, pneumatischen, hydrodynamischen, hydrostatischen Prinzip oder auf einem aus diesen Prinzipien gemischten Prinzip beruhen.

Die Automatisierung bezieht sich auf die verschiedensten Funktionen, wie zum Beispiel das Anfahren, die Übersetzungswahl, die Art der Übersetzungsveränderung bei verschiedene Betriebssituationen, wobei unter Art der Übersetzungsveränderung zum Beispiel das Schalten von einzelnen Stufen nacheinander, das Überspringen von Schaltstufen und die Geschwindigkeit der Verstellung verstanden werden kann.

Der Wunsch nach Komfort, Sicherheit und vertretbarem Bauaufwand bestimmt den Automatisierungsgrad d. h. wie viele Funktionen selbständig ablaufen.

In der Regel kann der Fahrer manuell in den automatischen Ablauf eingreifen oder ihn für einzelne Funktionen begrenzen.

Automatgetriebe im engeren Sinne, wie sie heute vor allem im Fahrzeugbau verwendet werden, haben in der Regel folgenden Aufbau:

Auf der Antriebsseite des Getriebes befindet sich eine Anfahreinheit in Form einer regelbaren Kupplung, zum Beispiel einer nassen oder trockenen Reibungskupplung, einer hydrodynamischen Kupplung oder einem hydrodynamischen Wandler.

Zu einem hydrodynamischen Wandler wird häufig eine Überbrückungskupplung parallel zum Pumpen- und Turbinenteil geschaltet, welche durch direkte Kraftübertragung den Wirkungsgrad steigert und durch definierten Schlupf bei kritischen Drehzahlen die Schwingung dämpft.

Die Anfahreinheit treibt ein mechanisches, stufenloses oder gestuftes Wechselgetriebe an, das eine Vorwärts-/Rückwärtsfahreinheit, eine Haupt-, Bereichs-, Splitgruppe und/oder einen Variator enthalten kann. Zahnradgetriebegruppen werden, je nach Anforderungen an Laufruhe, Platzverhältnisse und Übertragungsmöglichkeiten, in Vorgelege- oder Planetenbauweise mit Gerad- oder Schrägverzahnung ausgelegt.

Das Ausgangselement des mechanischen Getriebes, eine Welle oder ein Zahnrad, treibt direkt oder indirekt über Zwischenwellen bzw. eine Zwischenstufe mit einer konstanten Übersetzung auf ein Differentialgetriebe, das als separates Getriebe gestaltet sein kann oder ein integrierter Bestandteil des Automatgetriebes ist. Grundsätzlich eignet sich das Getriebe für Längs- und Quereinbau im Fahrzeug.

Zur Verstellung der Übersetzung im mechanischen Getriebe sind hydrostatische, pneumatische und/oder elektrische Stellglieder vorgesehen. Eine Hydraulikpumpe, die nach dem Verdrängungsprinzip arbeitet, liefert Drucköl für die Anfahreinheit, insbesondere die hydrodynamische Einheit, für die hydrostatischen Stellelemente des mechanischen Getriebes und für die Schmierung und Kühlung des Systems. Je nach erforderlichem Druck und Fördervolumen kommen Zahnradpumpen, Schraubenpumpen, Flügelzellenpumpen und Kolbenpumpen, letztere meistens in radialer Bauart, in Frage. In der Praxis haben sich Zahnradpumpen und Radialkolbenpumpen für diesen Zweck durchgesetzt, wobei die Zahnradpumpen wegen ihres geringen Bauaufwandes und die Radialkolbenpumpe wegen des höheren Druckniveaus und der besseren Regelbarkeit Vorteile bieten.

Die Hydraulikpumpe kann an einer beliebigen Stelle des Getriebes an einer ständig von der Antriebseinheit angetriebenen Haupt- oder Nebenwelle angeordnet sein.

Es sind stufenlose Automatgetriebe bekannt, bestehend aus einer Anfahreinheit, einem Planetenwendegetriebe als Vorwärts-/Rückwärtsfahreinheit, einer Hydraulikpumpe, einem Variator, einer Zwischenwelle und einem Differential. Der Variator wiederum besteht aus zwei Kegelscheibenpaaren und einem Umschlingungsorgan. Jedes Kegelscheibenpaar besteht aus einer in axialer Richtung verschiebbaren zweiten Kegelscheibe. Zwischen diesen Kegelscheibenpaaren läuft das Umschlingungsorgan, zum Beispiel ein Schubgliederband, eine Zugkette oder ein Riemen. Über die Verstellung der zweiten Kegelscheibe ändert sich der Laufradius des Umschlingungsorgans und somit die Übersetzung des stufenlosen Automatgetriebes.

Stufenlose Automatgetriebe erfordern ein hohes Druckniveau, um die Kegelscheiben des Variators in allen Betriebspunkten mit der gewünschten Geschwindigkeit verstellen zu können und außerdem mit einem genügenden Basisanpressdruck weitgehend verschleißfrei das Drehmoment zu übertragen.

Aus der gattungsgemäßen Offenlegungsschrift DE 103 54 720 A1 ist ein Kegelscheibenumschlingungsmittelgetriebe mit einem primären und einem sekundären Kegelscheibenpaar und einem zwischen jeweils einer Wegscheibe und einer Festscheibe der Kegelscheibenpaare verspannten, die beiden Kegelscheibenpaare verbindenden Umschlingungsmittel bekannt. Dabei umfasst zumindest eine Festscheibe zwei voneinander getrennte Scheibenteile, wobei das erste Scheibenteil axial fest und das zweite Scheibenteil zum ersten Scheibenteil axial begrenzt verlagerbar und beide Scheibenteile drehfest mit der entsprechenden Welle verbunden sind. Zwischen den beiden Scheibenteilen kann eine Dämpfungseinrichtung wirksam sein.

Die Offenlegungsschrift DE 38 24 864 A1 offenbart eine Riemenscheibe für ein Regelgetriebe, wobei die Riemenscheibe zwei ringförmige Flansche aufweist, von denen der eine auf einer Nabe von Federmitteln gesteuert axial bewegbar ist. Die Federmittel werden dabei von zumindest einer mit einer aus elastischem Material umhüllten Membranfeder gebildet. Ein Abstandselement aus elastischem Material ist zwischen der Membranfeder und einem fest mit der Nabe verbundenen Abschützteil eingesetzt. An seinem dem Abstützteil zugewandten Ende ist das Abstandselement in einer in dem Abstützteil ausgebildeten Aufnahme eingespannt.

Eine der Erfindung zugrunde liegende Teilaufgabe liegt darin, die Betriebsfestigkeit von Bauteilen zu erhöhen und somit die Lebensdauer eines derartigen Automatgetriebes zu verlängern. Eine weitere Teilaufgabe der Erfindung liegt darin begründet, die Drehmomentübertragungsfähigkeit eines derartigen Getriebes zu erhöhen bzw. größere Kräfte durch die Bauteile des Getriebes übertragen zu können. Außerdem - so eine weitere Teilaufgabe - soll ein derartiges Getriebe wirtschaftlich gefertigt werden können.

Eine weitere der Erfindung zugrunde liegende Teilaufgabe liegt darin, den Variator eines Kegelscheibenumschlingungsgetriebes mit möglichst hoher Geschwindigkeit verstellen zu können, also die maximale Verstellung zwischen Underdrive und O-verdrive bzw. umgekehrt schnellstmöglich zu erreichen. Bei den bisher bekannten stufenlosen Fahrzeuggetrieben, insbesondere bei Umschlingungsmittelgetrieben, läuft die Schnellverstellung in den meisten Fällen derart ab, dass eine schnelle Übersetzungsverstellung typischerweise übersetzungsgeregelt betrieben wird. Durch diesen übersetzungsgeregelten Betrieb muss jedoch auf die Regelung in bisheriger Form selbst Rücksicht genommen werden. Damit es nicht zu Schwingungen kommt, muss man in der Regel Einbussen in der Verstelldynamik in Kauf nehmen, also eine Verlangsamung der Verstellung, weil aus Stabilitätsgründen die maximale Kraft während des gesamten Verstellvorgangs nicht ausgenutzt werden kann. Zudem muss die Verstellgeschwindigkeit vor Erreichen der Anschläge reduziert werden, da diese nicht mit hoher Dynamik angefahren werden können, und auch den erforderlichen Abbremsvorgang nicht selbst übernehmen können. Insbesondere bei Getrieben wie beispielsweise einem Konzept, in welchem ein CVT-Getriebe in Kombination mit einem nachgeschalteten automatisierten Schaltgetriebe oder Stufenautomaten betrieben wird, kommt es in den Schaltungen darauf an, den CVT-Teil des Getriebes schnellstmöglich verstellen zu können.

Die Aufgabenteile werden durch die in den Ansprüchen dargelegte sowie in der Beschreibung auch in Zusammenhang mit den Figuren erläuterte Erfindung mit deren Weiterbildungen gelöst.

Erfindungsgemäß trägt zur Lösung der Aufgabe und zur Verbesserung von Getrieben nach dem Stand der Technik ein Kegelscheibenumschlingungsgetriebe bei mit antriebsseitigen und abtriebsseitigen Kegelscheibenpaaren, die jeweils eine Festscheibe und eine Wegscheibe aufweisen, die jeweils auf einer antriebsseitigen und einer abtriebsseitigen Welle angeordnet und über ein Umschlingungsmittel zur Drehmomentübertragung verbindbar sind, wobei zumindest ein Anschlag an zumindest einer der Endlagen zumindest einer Wegscheibe mit einem Abbremsmechanismus versehen ist. Dabei ist der Abbremsmechanismus selbsttätig wirksam und so ausgelegt, dass kurz vor dem Grenzanschlag, bei welchem das Umschlingungsmittel - beispielsweise in Form einer Kette - aus dem Scheibensatz auslaufen könnte, eine Elastizität eingebaut wird, die dafür sorgt, dass der Scheibensatz beim Fahren in den Anschlag keinen Schaden nimmt. Weiterhin weist bei einem erfindungsgemäßen Kegelscheibenumschlingungsgetriebe der Anschlag einen Dämpfungsring auf, wobei dieser mehrteilig ausgeführt ist.

Dies führt zu einer Optimierung des Anschlags bzw. der Anschläge.

Allgemein kann es von Vorteil sein, wenn der Dämpfungsring aus einem elastischen Stahlmaterial besteht.

Weiterhin kann der Dämpfungsring von zwei Lagerschalen umschlossen werden.

Bei einem Kegelscheibenumschlingungsgetriebe nach der Erfindung kann es von Vorteil sein, wenn im Bereich des Anschlags ein Druckmedium komprimiert wird, wobei als Druckmedium das im Kegelscheibenumschlingungsgetriebe vorhandene hydraulische Medium verwendet werden kann.

Hierzu kann das zur Übersetzungsverstellung erforderliche hydraulische Medium als Druckmedium verwendet werden.

So besteht beispielsweise die Möglichkeit, über eine Blende das hydraulische Medium an einen speziell ausgebildeten Anschlag zu bringen und diesen Anschlag so auszubilden, dass bei der Verstellung kurz vor dem Anschlag eine Komprimierung des hydraulischen Mediums erfolgt und damit eine Dämpfung erzielt wird. Hierzu kann beispielsweise das zur Verstellung notwendige Öl über eine separate Stichleitung dem Dämpfungsanschlag zugeführt werden.

Besonders vorteilhaft kann es bei einem Kegelscheibenumschlingungsgetriebe nach der Erfindung sein, wenn zur Verstellung der Übersetzung die maximale Verstellkraft erzeugt wird, wobei es zweckmäßig sein kann, die maximale Verstellkraft bei einer Schnellverstellung softwareseitig zu unterstützen, was beispielsweise durch einen Offset in der Ansteuergröße erreicht werden kann, wobei der Offset ein Stromoffset sein kann.

Die softwareseitige Ansteuerung kann beispielsweise derart erfolgen, dass bei dem Befehl Schnellverstellung" sofort die Ansteuergröße durch einen Offsetwert - vorgesteuert - in einer solchen Art manipuliert wird, dass die maximale Verstellkraft für die Verstellung erzeugt wird. So ist beispielsweise bei einer Underdriveschnellverstellung denkbar, dass dann sofort der Strom durch einen Offset auf beispielsweise 1000 mA angehoben wird. Kurz vor Erreichen des Anschlags kann dann der Strom auf einen Wert abgesenkt werden, der zum Halten der Underdriveübersetzung notwendig ist. Dieser ist meist bei Kenntnis der jeweiligen Lastsituation (Variatormoment, Drehzahl) bekannt.

Es wäre auch möglich, wenn man in einem quasi geregeltem Betrieb bleiben möchte, dass man eine Reglerparameterumschaltung oder Reglerstrukturumschaltung bei der Schnellverstellung vorsieht, so dass in kürzester Zeit eine maximale Verstellkraft erzeugt werden kann. Dabei sollte gleichzeitig der Sollwert so verändert werden, dass eine große Regelabweichung erzielt wird, und damit die Ansteuergröße so verändert wird, dass maximale Verstellkräfte erreicht werden.

Es kann sich als vorteilhaft erweisen, wenn bei einem erfindungsgemäßen Kegelscheibenumschlingungsgetriebe bei einer Schnellverstellung der geregelte Betriebszustand derart unterstützt wird, dass sich unmittelbar Werte für den Sollwert ergeben, die zu einer großen Regelabweichung führen, wobei die Ansteuergröße unmittelbar Extremwerte annehmen kann.

Vorteilhaft kann es weiterhin sein, wenn bei der Ansteuergröße in sehr kurzer Zeit Extremalwerte anliegen.

Bei einem Kegelscheibenumschlingungsgetriebe nach der Erfindung, kann es Vorteil sein, wenn die Schnellverstellung durch die Software derart unterstützt wird, dass es im übersetzungsgeregelten Betrieb zu einer Erhöhung/Umschaltung der Regelparameter kommt, so dass die Ansteuerwerte in kurzer Zeit hohe Werte oder Extremalwerte annehmen, wobei im Regler eine Strukturumwandlung stattfinden kann, so dass die Ansteuerwerte in kurzer Zeit hohe Werte oder Extremalwerte annehmen.

Weiterhin bezieht sich die Erfindung auf ein Verfahren zur Steuerung und/oder zum Betrieb eines erfindungsgemäßen Getriebes.

Des Weiteren bezieht sich die Erfindung auf ein Fahrzeug mit einem erfindungsgemäßen Getriebe.

Die Erfindung wird im Folgenden anhand schematischer Zeichnungen beispielsweise mit weiteren Einzelheiten erläutert.

Es stellen dar:
- Figur 1: eine Teilansicht eines Kegelscheibenumschlingungsgetriebes,
- Figur 2: eine im Wesentlichen der Figur 1 entsprechende Darstellung einer weiteren Ausführungsform,
- Fig. 3: Ausführungsbeispiele abtriebsseitiger Kegelscheibenpaare,
- Figur 4: einen Ausschnitt im Nabenbereich der abtriebsseitigen Wegscheibe,
- Fig. 5: einen Teilschnitt einer Ausführungsform eines Dämpfungsrings,
- Fig. 6: einen weiteren Ausschnitt im Nabenbereich einer abtriebsseitigen Wegscheibe.

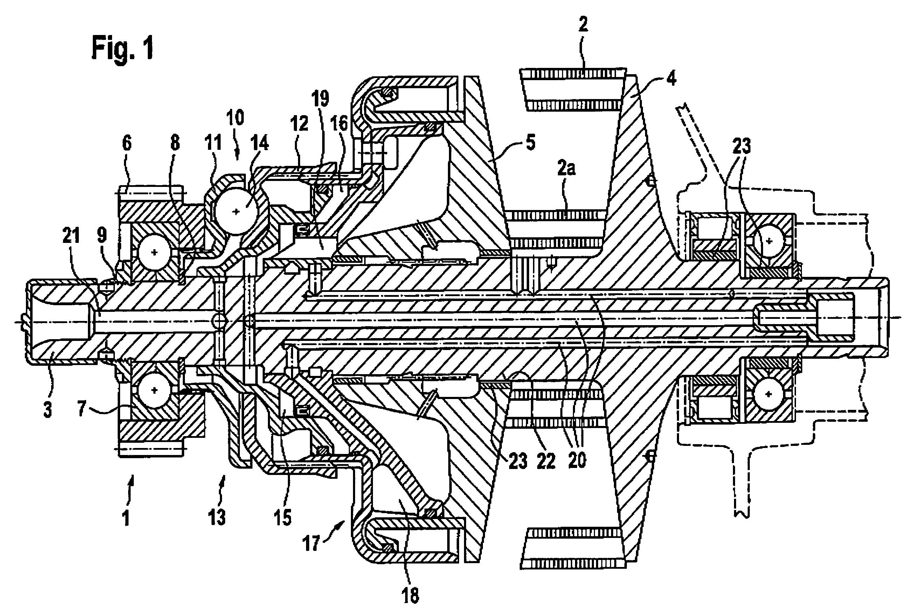

Figur 1 zeigt nur einen Teil eines Kegelscheibenumschlingungsgetriebes, nämlich den von einem Antriebsmotor, wie beispielsweise einem Verbrennungsmotor angetriebenen antriebs- oder eingangsseitigen Teil des Kegelscheibenumschlingungsgetriebes 1. Bei einem vollständig ausgeführten Kegelscheibenumschlingungsgetriebe ist diesem eingangsseitigen Teil ein komplementär ausgebildeter abtriebsseitiger Teil des stufenlos einstellbaren Kegelscheibenumschlingungsgetriebes zugeordnet, wobei beide Teile über ein Umschlingungsmittel in der Form beispielsweise einer Laschenkette 2 zur Momentenübertragung miteinander verbunden sind. Das Kegelscheibenumschlingungsgetriebe 1 weist eingangsseitig eine Welle 3 auf, die bei dem dargestellten Ausführungsbeispiel einstückig mit einer feststehenden Kegelscheibe oder Festscheibe 4 ausgebildet ist. Diese axial feststehende Kegelscheibe 4 befindet sich in Axiallängsrichtung der Welle 3 einer axial verlagerbaren Kegelscheibe oder Wegscheibe 5 benachbart gegenüber.

Bei der Darstellung nach Fig. 1 ist die Laschenkette 2 am antriebsseitigen Kegelscheibenpaar 4, 5 in einer radial äußeren Stellung dargestellt, die sich dadurch ergibt, dass die axial verlagerbare Kegelscheibe 5 in der Zeichnung in Richtung nach rechts verlagert wird und diese Verlagerungsbewegung der axial verlagerbaren Kegelscheibe 5 zu einer Bewegung der Laschenkette 2 in Richtung nach radial außen führt, wodurch sich eine Übersetzungsänderung des Getriebes ins Schnelle ergibt.

Die axial verlagerbare Kegelscheibe 5 kann in an sich bekannter Weise in der Zeichnungsebene auch nach links verlagert werden, wobei sich in dieser Stellung die Laschenkette 2 in einer radial inneren Stellung befindet (die mit dem Bezugszeichen 2a versehen ist), bei der sich eine Übersetzung des Kegelscheibenumschlingungsgetriebes 1 ins Langsame ergibt.

Das von einem nicht näher dargestellten Antriebsmotor bereit gestellte Drehmoment wird in den in Fig. 1 dargestellten antriebsseitigen Teil des Kegelscheibenumschlingungsgetriebes über ein auf der Welle 3 gelagertes Zahnrad 6 eingeleitet, welches auf der Welle 3 über ein Wälzlager in der Form eines axiale und radiale Kräfte aufnehmenden Kugellagers 7 gelagert ist, welches auf der Welle 3 über eine Scheibe 8 und eine Wellenmutter 9 festgelegt wird. Zwischen dem Zahnrad 6 und der axial verlagerbaren Kegelscheibe 5 befindet sich ein Drehmomentfühler 10 angeordnet, dem eine mit einer axial feststehenden Spreizscheibe 11 und einer axial verlagerbaren Spreizscheibe 12 versehene Spreizscheibenkonfiguration 13 zugeordnet ist. Zwischen den beiden Spreizscheiben 11, 12 sind Wälzkörper beispielsweise in der Form der dargestellten Kugeln 14 angeordnet.

Ein über das Zahnrad 6 eingeleitetes Drehmoment führt zur Ausbildung eines Drehwinkels zwischen der axial feststehenden Spreizscheibe 11 und der axial verlagerbaren Spreizscheibe 12, was zu einer axialen Verlagerung der Spreizscheibe 12 führt und zwar aufgrund von an dieser angeordneten Anlauframpen, auf die die Kugeln 14 auflaufen und so für einen axialen Versatz der Spreizscheiben zueinander sorgen.

Der Drehmomentfühler 10 besitzt zwei Druckräume 15, 16, von denen der erste Druckraum 15 für eine Beaufschlagung mit Druckmittel in Abhängigkeit von dem eingeleiteten Drehmoment vorgesehen ist und der zweite Druckraum 16 mit Druckmittel versorgt wird und zwar in Abhängigkeit von der Übersetzung des Getriebes.

Zur Erzeugung der Anpresskraft, mit der die Laschenkette 2 zwischen der axial feststehenden Kegelscheibe 4 und der axial verlagerbaren Kegelscheibe 5 mit einer Normalkraft beaufschlagt wird, ist eine Kolben/Zylindereinheit 17 vorgesehen, die zwei Druckräume 18, 19 besitzt. Der erste Druckraum 18 dient der übersetzungsabhängigen Veränderung der Beaufschlagung der Laschenkette 2 und der zweite Druckraum 19 dient in Verbindung mit dem drehmomentabhängig gesteuerten Druckraum 15 des Drehmomentfühlers 10 zur Erhöhung oder Verringerung der Anpresskraft, mit der die Laschenkette 2 zwischen den Kegelscheiben 4, 5 beaufschlagt wird.

Die Welle 3 besitzt zur Druckmittelversorgung der Druckräume drei Kanäle 20, über die von einer nicht dargestellten Pumpe Druckmittel in die Druckräume eingespeist wird. Über einen auslassseitigen Kanal 21 kann das Druckmittel aus der Welle 3 abfließen und dem Kreislauf wieder zugeführt werden.

Die Beaufschlagung der Druckräume 15, 16, 18, 19 führt zu einer momenten- und übersetzungsabhängigen Verschiebung der axial verlagerbaren Kegelscheibe 5 auf der Welle 3. Die Welle 3 besitzt zur Aufnahme der verlagerbaren Kegelscheibe 5 Zentrierflächen 22, die als Schiebesitz für die verlagerbare Kegelscheibe 5 dienen.

Wie es anhand der Fig. 1 leicht ersichtlich ist, besitzt das Kegelscheibenumschlingungsgetriebe 1 im Bereich der Lagerstellen der Kegelscheibe 5 auf der Welle 3 jeweils eine Geräuschdämpfungseinrichtung 23. Dazu kann die Geräuschdämpfungseinrichtung einen Ringkörper und eine dämpfende Einlage aufweisen oder nur aus einer dämpfenden Einlage bestehen.

Die in Figur 1 verwendeten Bezugszeichen beziehen sich auch auf die im Wesentlichen vergleichbaren Merkmale der weiteren Figuren. Die Figuren sind also insofem als Einheit zu betrachten. Der Übersichtlichkeit halber sind in den weiteren Figuren nur diejenigen Bezugszeichen verwendet, die über diejenigen der Figur 1 hinausgehen.

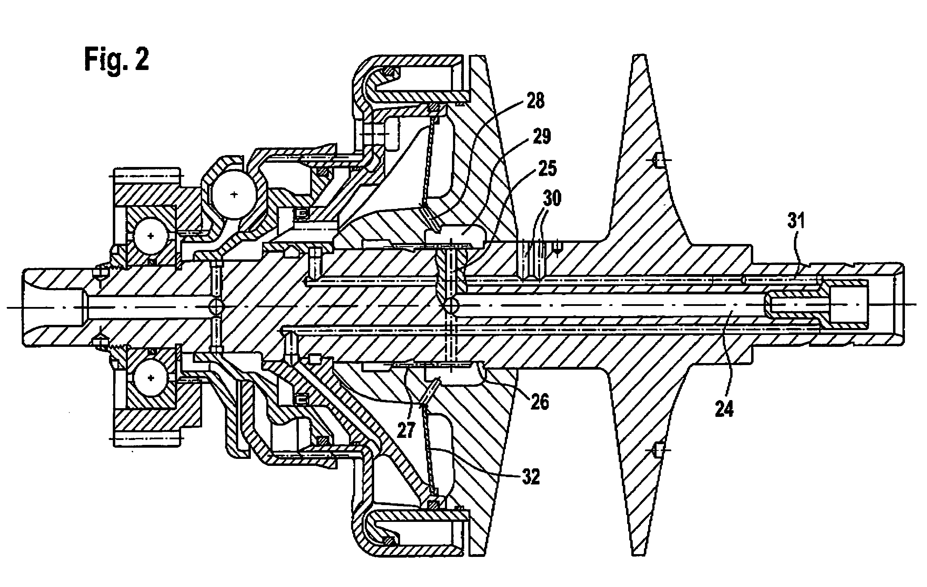

In Figur 2 ist nun der mittlere der drei Kanäle 20 in gegenüber Figur 1 modifizierter Form ausgestaltet. Es ist ersichtlich, dass diese den zentralen Kanal 20 bildende Bohrung 24, die als Sacklochbohrung von der Figur 1 und 2 rechts dargestellten Seite gefertigt wird, deutlich kürzer ausgeführt ist als in Figur 1. Derartige Sacklochbohrungen sind aufwendig in der Herstellung und erfordern einen sehr hohen Genauigkeitsgrad in der Fertigung. Der Herstellungsaufwand sowie die Anforderungen hinsichtlich der Prozesssicherheit steigen dabei überproportional mit der Länge. Die Verkürzung einer derartigen Bohrung wirkt sich also günstig z. B. auf die Herstellkosten aus.

Im Bereich des Grundes dieser Bohrung 24 zweigt die Querbohrung 25 ab, von denen mehrere am Umfang verteilt angeordnet sein können. Im dargestellten Fall ist diese Querbohrung 25 als radiale Bohrung dargestellt; sie kann jedoch auch in einem anderen Winkel als Schrägbohrung gefertigt werden. Die Bohrung 25 durchdringt die Mantelfläche der Welle 3 an einer Stelle, die unabhängig vom Betriebszustand, also z. B. von der eingestellten Übersetzung, in einem Bereich liegt, der stets von der Wegscheibe 5 überdeckt wird.

Durch das Verlegen der Querbohrung 25 in den Überdeckungsbereich der Wegscheibe 5 kann die Welle 3 axial kürzer ausgeführt werden, wodurch Bauraum eingespart werden kann. Außerdem kann sich durch die Verkürzung der Welle 3 auch eine Belastungsreduzierung ergeben.

Die Mündung des Kanals bzw. der Querbohrung 25 kann dabei beispielsweise im Bereich der Ausdrehung 26, der der Zentrierfläche 22 der Welle benachbart ist, angeordnet werden. Dies kann insbesondere vorteilhaft sein, wenn die Verzahnung 27, die die Wegscheibe 5 axial verschiebbar jedoch drehfest mit der Welle 3 verbindet, beispielsweise durch die Drehmomentübertragung hoch beansprucht ist.

In vielen Fällen wird jedoch die Belastung der Verzahnung 27 nicht das kritischste Auslegungskriterium sein, so dass die Mündung der Bohrung 25 in den Bereich dieser Verzahnung gelegt werden kann, wie dies in Figur 2 dargestellt ist. Durch die Anordnung der Querbohrung 25 in der Verzahnung 27 anstatt in der Ausdrehung 26, ergibt sich ein Vorteil dadurch, dass ein größeres Widerstandsmoment vorliegt, wodurch die Biegespannung in der Randfaser verringert wird. Außerdem ist das Flächenträgheitsmoment an dieser Stelle größer, während die kritische Faser die durch die Querbohrung 25 gestört ist, auf etwa gleich bleibendem Radius bleibt. Hierdurch ergibt sich eine deutliche Verringerung der Spannungen im kritischen Bereich um die Mündung der Querbohrung 25 zwischen den Zähnen der Verzahnung 27. Die Versorgung mit Hydraulikfluid ist bei den Figuren 1 und 2 identisch, da die Druckräume 15 und 19 miteinander in Verbindung stehen und die Wegscheibe 5 Verbindungsbohrungen 28 aufweist, die den Bereich der Verzahnung 27 mit dem Druckraum 19 verbinden. In den Figuren ist die Wegscheibe 5 in ihrer äußersten linken Stellung die der Anfahrübersetzung bzw. dem Underdrive entspricht, dargestellt. Wird die Wegscheibe 5 nun nach rechts in Richtung der Festscheibe 4 verschoben, so befindet sich stets ein Teil des Hohlraums bzw. der Kammer 29 über der Mündung der Querbohrung bzw. des Kanal 25, so dass die erforderliche Fluidversorgung ebenso wie in Figur 1 stets gewährleistet ist. Wie auch in Figur 1 gibt es für den Druckraum 16 zwei Schaltzustände, die von der axialen Position der Wegscheibe 5 abhängen. In der dargestellten Stellung sind die Steuerbohrungen 30 freigelegt, so dass der damit in Verbindung stehende, mit einem Stopfen 31 axial verschlossene Kanal 20 und der mit ihm über einen nicht dargestellten Kanal in Verbindung stehende Druckraum 16 drucklos sind bzw. lediglich Umgebungsdruck aufweisen. Wird nun die Wegscheibe 5 auf die Festscheibe 4 zu bewegt, so überfährt sie die Steuerbohrungen 30, wobei ab einem bestimmten Weg die Kammer 29 über den Mündungen der Steuerbohrungen 30 zu liegen kommt. In der Kammer 29 herrscht jedoch ein vom Moment abhängiger hoher Druck, der dann über die Steuerbohrungen 30 und den Kanal 20 auch in die Druckkammer 16 gebracht wird, so dass dort auch hoher Druck anliegt. Auf diese Weise werden zwei Schaltzustände realisiert, die die Anpresskraft übersetzungsabhängig steuern.

Weiterhin ist in Figur 2 eine Tellerfeder 32 vorgesehen, die im drucklosen Zustand des Getriebes 1 die Wegscheibe 5 in eine vorbestimmte axiale Position bringt, wodurch eine Übersetzung des Getriebes 1 eingestellt werden kann, die eine übermäßige Belastung, beispielsweise beim Abschleppen des Fahrzeugs, verhindert.

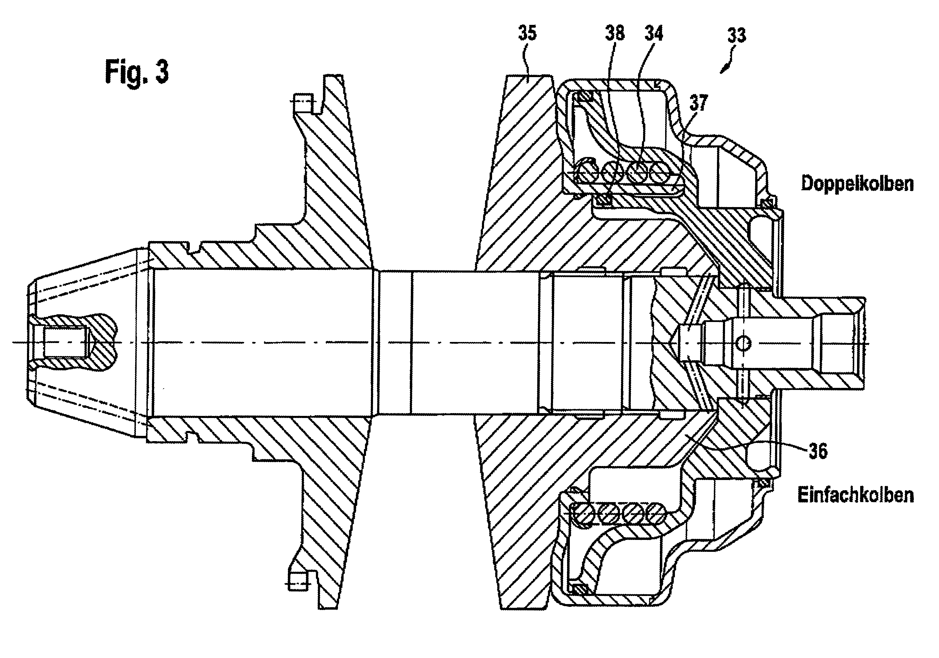

Figur 3 zeigt zwei Ausgestaltungsmöglichkeiten des abtriebsseitigen Kegelscheibensatzes 33, wobei in der unteren Hälfte ein nach dem Einfachkolbenprinzip aufgebauter Scheibensatz dargestellt ist, während in der oberen Hälfte ein nach dem Doppelkolbenprinzip aufgebauter Scheibensatz dargestellt ist, wie er beispielsweise in der DE 103 54 720.7 beschrieben ist.

Beim Doppelkolbenprinzip stehen für die Anpressung und die Verstellung getrennte Kolben zur Verfügung, während beim Einfachkolbenprinzip lediglich eine Kolben-/Zylinder-Einheit die entsprechende Kraft in den Scheibensatz einleitet.

Gegenüber den bisher geläufigen Ausführungsformen weist hier die Druckfeder 34 einen größeren Durchmesser auf, wodurch ihr Angriffspunkt an der Wegscheibe 35 radial weiter außen zu liegen kommt. Aus dieser Anordnung ergibt sich unter anderem der Vorteil, dass mehr Bauraum zur Verfügung steht, um den Kegelscheibenhals bzw. die Nabe 36 aufzudicken bzw. geometrisch stärker auszubilden und im Durchmesser zu vergrößern. Der hieraus sich ergebende Festigkeitsgewinn ist bereits oben beschrieben. Beim in Figur 3 oben dargestellten Doppelkolbenprinzip ergibt sich hieraus eine geänderte Anordnung der Druckfeder 34 dahingehend, dass diese vom radial inneren Druckraum in den radial äußeren Druckraum verschoben wird. Das die Druckfeder 34 radial innen stützende Blechteil 37 ist fest mit der Wegscheibe 35 verbunden und dient mit seiner der Feder 34 abgewandten Seite als Dichtungslaufbahn für die Dichtung 38. Diese Dichtungslaufbahn kann jedoch auch einstückig mit der Wegscheibe 35 ausgebildet sein. Dieses einstückig mit der Wegscheibe 35 ausgebildete Teil würde dann wiederum mit seinem radial äußeren Bereich die Druckfeder 34 radial innen haltern. Bei innenliegender Druckfeder 34 kann dieses Teil radial innen und außen jeweils eine Dichtungslaufbahn bilden.

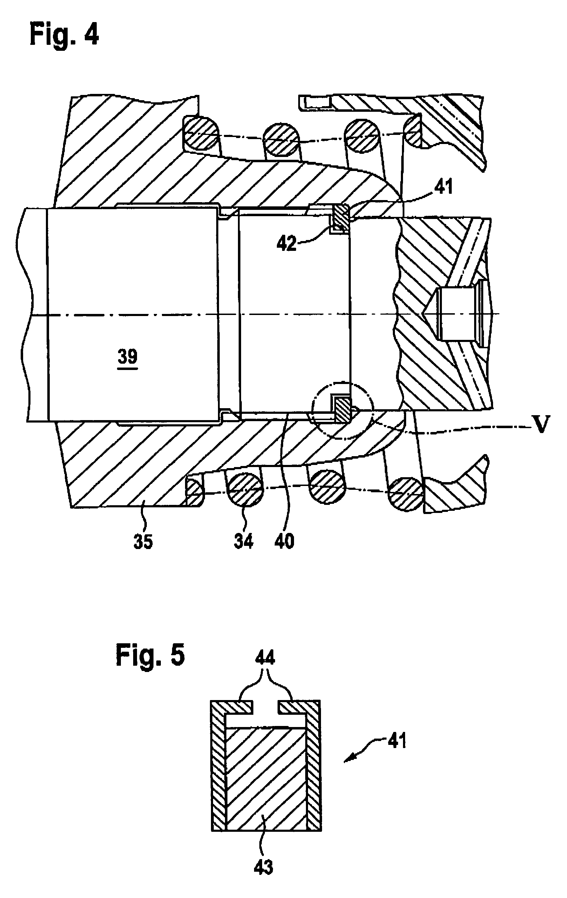

Figur 5 zeigt einen Ausschnitt aus dem abtriebsseitigen Kegelscheibensatz 33, wobei die abtriebsseitige Wegscheibe 35 auf der abtriebsseitigen Welle 39 drehfest, jedoch axial verschiebbar über die Verzahnung 40 gehalten ist. Die Verzahnung 40 ist als Vielkeilverzahnung ausgeführt, d. h. das Verzahnungsprofil wiederholt sich mehrfach über den Umfang. Weiterhin ist die Druckfeder 34 dargestellt, die, wie bereits beschrieben, die abtriebsseitige Wegscheibe 35 in Richtung auf die abtriebsseitige Festscheibe belastet, die in Figur 4 nicht dargestellt ist und links von der abtriebsseitigen Wegscheibe 35 angeordnet ist, wie dies schematisch in Figur 3 dargestellt ist.

In der dargestellten äußerst linken Position der abtriebsseitigen Wegscheibe 35, läuft das Umschlingungsmittel 2 aufgrund des engstmöglichen Keilspaltes zwischen den beiden Kegelscheiben auf dem größtmöglichen Durchmesser. Da hier der abtriebsseitige Kegelscheibensatz 33 dargestellt ist, befindet sich der Variator des Getriebes in Underdrive-Stellung, die beispielsweise zum Anfahren dient.

In der in Figur 4 dargestellten Endposition liegt die abtriebsseitige Wegscheibe 35 an dem Anschlagring 41 an. Der Anschlagring 41 ist in einer Nut 42 der abtriebsseitigen Welle 39 angeordnet und gehalten. Aufgrund seiner Elastizität vermeidet der Anschlagring 41 einen zu harten Endanschlag der abtriebsseitigen Wegscheibe 35 im Bereich der maximalen Underdrive-Verstellposition. Der Anschlagring 41 kann dabei beispielsweise aus Stahldrahtgeflecht hergestellt sein, wodurch sichergestellt werden kann, dass er bei ausreichender Elastizität die gewünschte Lebensdauer erreicht. Es wäre auch denkbar, den Anschlagring 41 unter Verwendung eines Federpakets, beispielsweise in Form eines Tellerfederpakets, zu bilden. Dadurch ist es möglich, ein gewünschtes Anschlagverhalten wie beispielsweise eine progressiv sich erhöhende Gegenkraft, zu erzeugen, so dass die abtriebsseitige Wegscheibe 35 im Bereich vor ihrem Endanschlag verhältnismäßig weich abgefangen wird. Die Funktion ist dabei mit der eines Anschlagpuffers vergleichbar.

Figur 5 zeigt einen Ausschnitt gemäß V der Figur 4 und stellt eine Vergrößerung des Querschnitts des Anschlagrings 41 dar. In Figur 5 ist lediglich als Beispiel dargestellt, dass der Anschlagring 41 aus einem Stahldrahtgeflecht 43 bestehen kann, an dem axial beidseitig jeweils eine Lagerschale 44 angeordnet ist. In dem dargestellten Beispiel bilden die Lagerschalen 44, wenn das Stahldrahtgeflecht komprimiert ist, einen praktisch festen Anschlag dadurch, dass deren aufeinander zu ragenden axialen Bereiche aneinander zur Anlage kommen.

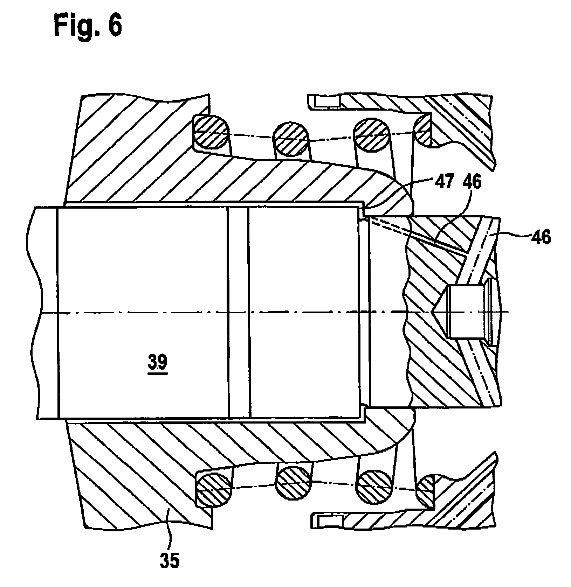

Figur 6 zeigt als Beispiel einen Endanschlag, bei dem die Dämpfung über Hydrauliköl erfolgt. Es ist wiederum die abtriebsseitige Welle 39 und die abtriebsseitige Wegscheibe 35 dargestellt, und zwar wiederum im Bereich der maximalen Underdrive-Stellung analog zu Figur 4. Von dem in Figur 6 gezeigten Ölzuführkanal 45, der Öl in die Verstelleinheit der abtriebsseitigen Wegscheibe 35 fördert, zweigt ein Kanal 46 ab. Der Ölzuführkanal 45 kann sowohl die Kolben-Zylindereinheit die zur Übersetzungsverstellung dient, als auch diejenige, die zur Anpressung dient, mit Hydraulikmedium versorgen. Durch den von diesem Ölzuführkanal 45 abzweigenden Kanal 46, der mehrfach über den Umfang verteilt angeordnet sein kann, wird Hydraulikmedium im Bereich des Endanschlags in die Kammer 47 gebracht, die axial zwischen einem Absatz der abtriebsseitigen Welle 39 und einem entsprechenden Gegenanschlag der abtriebsseitigen Wegscheibe 35 angeordnet ist. Aus dieser Kammer 47, die sich verkleinert, wenn die abtriebsseitige Wegscheibe 35 in die Nähe ihres Anschlags kommt, wird dann das dort befindliche Hydraulikmedium herausgepresst bzw. verdrängt, wodurch die Geschwindigkeit der Wegscheibe 35 verringert wird, so dass es zu einem gedämpften Anschlag der Wegscheibe 35 kommt. Der Vorteil dieser Lösung besteht darin, dass praktisch keine zusätzlichen Bauteile notwendig sind, und dass das bereits im Getriebe vorhandene hydraulische Medium zur Dämpfung des Endanschlags Verwendung finden kann.

Ein erfindungsgemäß ausgeführter Endanschlag ist lediglich als Beispiel an der abtriebsseitigen Wegscheibe 35 in maximaler Underdriveposition erklärt. Dies ist jedoch keinesfalls als Einschränkung zu betrachten, da alle vorhandenen Anschläge im Bereich des Variators in der erfindungsgemäßen Weise ausgeführt sein können bzw. beispielsweise abhängig von der Richtung der erforderlichen Schnellverstellung ein entsprechender Anschlag ausgewählt werden kann.

### Bezugszeichenliste

- 1: Kegelscheibenumschlingungsgetriebe
- 2: Laschenkette
- 2a: radial innere Stellung der Laschenkette
- 3: Welle
- 4: Festscheibe
- 5: Wegscheibe
- 6: Zahnrad
- 7: Kugellager
- 8: Scheibe
- 9: Wellenmutter
- 10: Drehmomentfühler
- 11: axial feststehende Spreizscheibe
- 12: axial verlagerbare Spreizscheibe
- 13: Spreizscheibenkonfiguration
- 14: Kugeln
- 15: erster Druckraum
- 16: zweiter Druckraum
- 17: Kolben-/Zylindereinheit
- 18: erster Druckraum
- 19: zweiter Druckraum
- 20: (drei) Kanäle (Einspeisung)
- 21: Kanal (auslassseitig)
- 22: Zentrierfläche
- 23: Geräuschdämpfungseinrichtung
- 24: (zentrale) Bohrung
- 25: Querbohrung(en)
- 26: Ausdrehung
- 27: Verzahnung
- 28: Verbindungsbohrungen
- 29: Hohlraum /Kammer
- 30: Steuerbohrungen
- 31: Stopfen
- 32: Tellerfeder
- 33: abtriebsseitiger (Kegel-) Scheibensatz
- 34: Druckfeder
- 35: Wegscheibe (abtriebsseitig)
- 36: Nabe
- 37: Blechteil (Dichtungslaufbahn)
- 38: Dichtung
- 39: Welle (abtriebsseitig)
- 40: Verzahnung
- 41: Anschlagring
- 42: Nut
- 43: Stahldrahtgeflecht
- 44: Lagerschale
- 45: ölzuführkanal
- 46: Kanal
- 47: Kammer

## Patentansprüche

1. Kegelscheibenumschlingungsgetriebe mit antriebsseitigen und abtriebsseitigen Kegelscheibenpaaren, die jeweils eine Festscheibe und eine Wegscheibe aufweisen, die jeweils auf einer antriebsseitigen und einer abtriebsseitigen Welle (3, 39)angeordnet und über ein Umschlingungsmittel (2) zur Drehmomentübertragung verbindbar sind, wobei zumindest ein Anschlag an zumindest einer der Endlagen zumindest einer Wegscheibe mit einem selbsttätig wirksamen Abbremsmechanismus (41, 47) versehen ist, welcher Anschlag einen Dämpfungsring (41) aufweist, **dadurch gekennzeichnet, dass** der Dämpfungsring (41) mehrteilig ausgeführt ist.

2. Kegelscheibenumschlingungsgetriebe nach Anspruch 1, **dadurch gekennzeichnet, dass** der Dämpfungsring (41) aus einem elastischen Stahlmaterial besteht.

3. Kegelscheibenumschlingungsgetriebe nach einem der Ansprüche 1 bis 2, **dadurch gekennzeichnet, dass** der Dämpfungsring (41) von zwei Lagerschalen (44) umschlossen wird.

4. Kegelscheibenumschlingungsgetriebe nach einem der vorhergehenden Ansprüche, **dadurch gekennzeichnet, dass** im Bereich des Anschlags (47) ein Druckmedium komprimiert wird.

5. Kegelscheibenumschlingungsgetriebe nach Anspruch 4, **dadurch gekennzeichnet, dass** als Druckmedium das im Kegelscheibenumschlingungsgetriebe vorhandene hydraulische Medium verwendet wird.

6. Kegelscheibenumschlingungsgetriebe nach einem der Ansprüche 4 oder 5, **dadurch gekennzeichnet, dass** das zur Übersetzungsverstellung erforderliche hydraulische Medium als Druckmedium verwendet wird.

7. Fahrzeug, **gekennzeichnet durch** ein Getriebe nach einem der vorhergehenden Ansprüche.

## Claims

1. Continuously variable cone-pulley transmission (1) with drive-input-side and drive-output-side conical disc pairs which have in each case one fixed disc and one moving disc which are arranged in each case on a drive-input-side and on a drive-output-side shaft (3, 39) and which can be connected via an endless chain-belt (2) for torque transmission, with at least one stop at at least one of the end positions of at least one moving disc being provided with an automatically acting braking mechanism (41, 47), which stop has a damping ring (41), **characterized in that** the damping ring (41) is of multi-part design.

2. Continuously variable cone-pulley transmission according to Claim 1, **characterized in that** the damping ring (41) is composed of an elastic steel material.

3. Continuously variable cone-pulley transmission according to one of Claims 1 to 2, **characterized in that** the damping ring (41) is surrounded by two bearing shells (44).

4. Continuously variable cone-pulley transmission according to one of the preceding claims, **characterized in that** a pressure medium is compressed in the region of the stop (47).

5. Continuously variable cone-pulley transmission according to Claim 4, **characterized in that** the hydraulic medium which is present in the continuously variable cone-pulley transmission is used as pressure medium.

6. Continuously variable cone-pulley transmission according to one of Claims 4 or 5, **characterized in that** the hydraulic medium required for adjusting the transmission ratio is used as pressure medium.

7. Vehicle, **characterized by** a transmission according to one of the preceding claims.

## Revendications

1. Transmission à courroie et à poulies coniques, comprenant des paires de poulies coniques du côté de l'entraînement et du côté de la sortie, qui présentent à chaque fois une poulie fixe et une poulie mobile, qui sont disposées à chaque fois sur un arbre du côté de l'entraînement et du côté de la sortie (3, 39) et qui peuvent être connectées en vue du transfert de couple par le biais d'un moyen de courroie (2), au moins une butée, sur au moins l'une des positions de fin de course d'au moins une poulie mobile, étant pourvue d'un mécanisme de freinage à action automatique (41, 47), cette butée présentant une bague d'amortissement (41), **caractérisée en ce que** la bague d'amortissement (41) est réalisée en plusieurs parties.

2. Transmission à courroie et à poulies coniques selon la revendication 1, **caractérisée en ce que** la bague d'amortissement (41) se compose d'un matériau en acier élastique.

3. Transmission à courroie et à poulies coniques selon l'une quelconque des revendications 1 à 2, **caractérisée en ce que** la bague d'amortissement (41) est entourée par deux coques de palier (44).

4. Transmission à courroie et à poulies coniques selon l'une quelconque des revendications précédentes, **caractérisée en ce qu'**un fluide de pression est comprimé dans la région de la butée (47).

5. Transmission à courroie et à poulies coniques selon la revendication 4, **caractérisée en ce que** l'on utilise comme fluide de pression le fluide hydraulique présent dans la transmission à courroie et à poulies coniques.

6. Transmission à courroie et à poulies coniques selon l'une quelconque des revendications 4 ou 5, **caractérisée en ce que** le fluide hydraulique nécessaire pour la commande de démultiplication est utilisé en tant que fluide de pression.

7. Véhicule **caractérisé par** une transmission selon l'une quelconque des revendications précédentes.
